# DEMANDE DE BREVET EUROPEEN

(11) **EP 0 584 015 A1**
(43) Date de publication de la demande: **23.02.1994**
(21) Numéro de dépôt: 93402057.9
(22) Date de dépôt: 13.08.1993
(51) Int. Cl.: B03B 9/04, B09B 3/00, A62D 3/00, C04B 18/10

(54) **Procédé de neutralisation des métaux lourds contenus dans les résidus d'incinération de déchets**

(30) Priorité: 14.08.1992 FR 9210060
(71) Demandeur: Société SECOMI, F-77640 Jouarre (FR)
(72) Inventeur: Lambert, Serge, F-75116 Paris (FR)
(74) Mandataire: Lemoyne, Didier

(57) **Abrégé**

Selon l'invention, ledit procédé comporte une étape de neutralisation consistant à former des sulfures, ou polysulfures, desdits métaux lourds.

Application au traitement des déchets domestiques ou industriels, et plus particulièrement, des résidus provenant de l'incinération de ces déchets.

## Description

La présente invention concerne un procédé de neutralisation de métaux lourds contenus dans des résidus d'incinération de déchets.

De manière générale, l'invention trouve une application avantageuse dans le domaine du traitement des déchets domestiques et industriels, et, plus particulièrement, des résidus provenant de l'incinération de ces déchets.

Les résidus d'incinération des déchets domestiques et industriels, à savoir mâchefers et cendres volantes, ne pourront à l'avenir être stockés dans des décharges qu'à la condition d'avoir été préalablement rendus complètement inertes. Or, en l'absence de traitement approprié, ces résidus libèrent par lixivation des métaux lourds toxiques, tels que mercure, zinc, plomb, cadminium, aluminium, cuivre, qui peuvent se retrouver dans les nappes phréatiques et donc les polluer.

Un procédé actuellement connu pour limiter la migration des métaux lourds consiste à les enrober dans une gangue de silicates jouant le rôle de piège. Ce procédé présente toutefois l'inconvénient que les silicates ne sont pas stables à terme et ont tendance à se désagréger progressivement comme ils le font dans les bétons. D'autre part, l'aluminium contenu dans la gangue de silicates se transforme peu à peu en alumine par percolation et peut ainsi être entraîné sous cette forme par lixivation.

Aussi le problème technique à résoudre par l'objet de la présente invention est de proposer un procédé de neutralisation de métaux lourds contenus dans des résidus d'incinération de déchets, procédé qui permettrait de neutraliser lesdits métaux lourds de manière sûre et définitive en les engageant dans des composés chimiquement stables sur des durées quasi infinies.

La solution au problème technique posé est obtenue selon la présente invention, du fait que ledit procédé comporte une étape de neutralisation consistant à former des sulfures, ou polysulfures, desdits métaux lourds.

Ainsi, les métaux lourds contenus dans lesdits résidus d'incinération, mâchefers ou cendres volantes, sont complètement neutralisés par leur oxydation à l'état de sulfures, ou polysulfures, qui sont des composées chimiques non polluants et stables à long terme, dont la stabilité est encore augmentée par leur aptitude à se minéraliser au cours du temps.

La description qui va suivre en regard des dessins annexés, donnés à titre d'exemple non limitatifs, feront bien comprendre en quoi consiste l'invention et comment elle peut être réalisée.

La figure 1 est un schéma à blocs d'un procédé conforme à l'invention mettant en oeuvre une étape de tri par voie mécanique.

La figure 2 est un schéma à blocs d'un procédé conforme à l'invention mettant en oeuvre une étape de tri par voie hydraulique.

La figure 3 est une vue en perspective d'un mélangeur-malaxeur chauffant, utilisé dans le procédé de neutralisation, objet de l'invention.

La figure 4 est une vue en perspective d'une cuve chauffante du mélangeur-malaxeur chauffant de la figure 3.

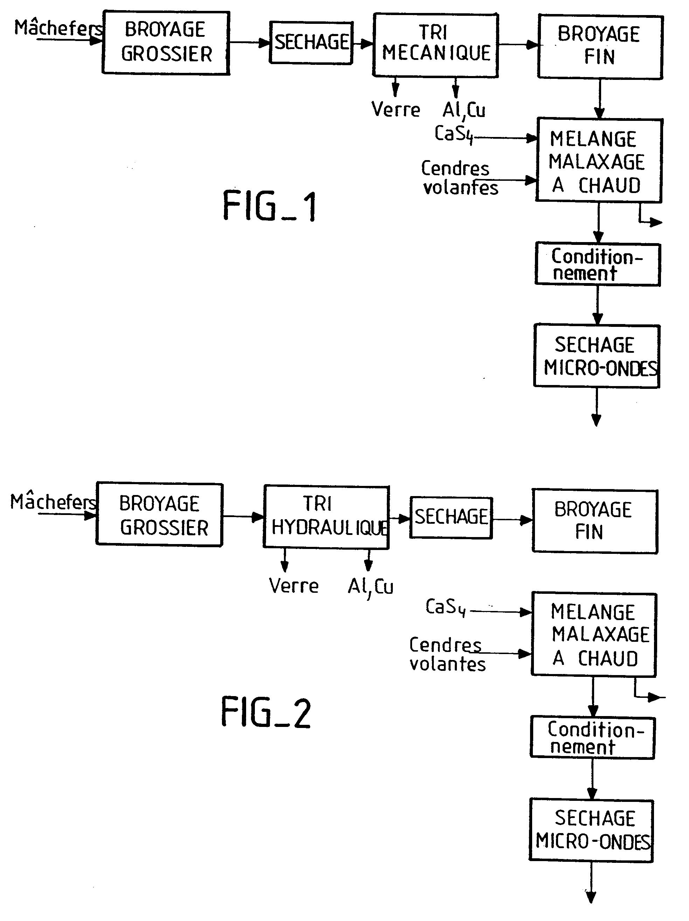

La figure 1 montre sur un schéma à blocs un procédé de neutralisation de métaux lourds contenus dans des résidus d'incinération de déchets, mâchefers et cendres volantes, procédé qui, dans l'exemple de la figure 1, comporte une première étape de broyage grossier destinée notamment à éliminer préalablement des mâchefers traités des morceaux de verre de grande dimension. Cette étape de broyage grossier est réalisée, par exemple à l'aide de tambours, appelés aussi "trommels", hexagonaux animés d'un mouvement de rotation. Au cours de cette étape, les mâchefers proprement dits se trouvent également ramenés à des morceaux de taille plus réduite.

Après avoir été grossièrement broyés, les mâchefers sont soumis à une étape de séchage précédant une étape de tri mécanique, cette dernière étant effectuée dans de meilleurs conditions lorsque les produits à trier sont secs. Ladite étape de séchage peut être réalisée dans des tubes sécheurs, connus en soi : les mâchefers provenant du broyeur héxagonal sont introduits dans un tube chauffé par l'extérieur, une aspiration de gaz étant prévue à l'intérieur du tube pour évacuer la vapeur d'eau et les autres produits dégagées au cours du chauffage par les mâchefers encore humides.

Si les mâchefers ne sont pas trop humides, l'opération de séchage peut être réalisée directement par injection d'air chaud dans le broyeur assurant le broyage grossier initial .

La figure 1 montre que les produits issus de l'étape de séchage sont ensuite triés par voie mécanique afin de séparer les mâchefers proprement dits d'autres résidus qu'ils contiennent encore à ce stade du traitement, à savoir des morceaux de verre et des métaux à l'état métallique tels que l'aluminium et le cuivre. Ce tri mécanique peut être effectué à l'aide d'un couloir spiral vibrant dans lequel les produits sont soumis à des vibrations de fréquence variable qui ont pour effet de séparer physiquement les mâchefers, le verre et lesdits métaux qui sont alors récupérés en vue de leur recyclage.

Les mâchefers ainsi débarrassés des résidus vitreux et métalliques subissent ensuite un broyage fin destiné à les préparer à la réaction chimique de sulfuration à laquelle ils seront ultérieurement soumis. Cette étape de broyage fin est réalisée avec tout type de broyeur connu permettant d'atteindre une division suffisante des produits, compatibles avec un bon rendement de la réaction de sulfuration. En particulier, on peut effectuer le broyage fin avec un broyeur classique à percuteur fixe, particulièrement bien adapté à cette application.

Après avoir été ainsi finement broyés, les mâchefers sont introduits dans un mélangeur-malaxeur à chaud avec un sulfure, par exemple du polysulfure de calcium CaS4, de manière à former les sulfures, ou polysulfures, de métaux lourds.

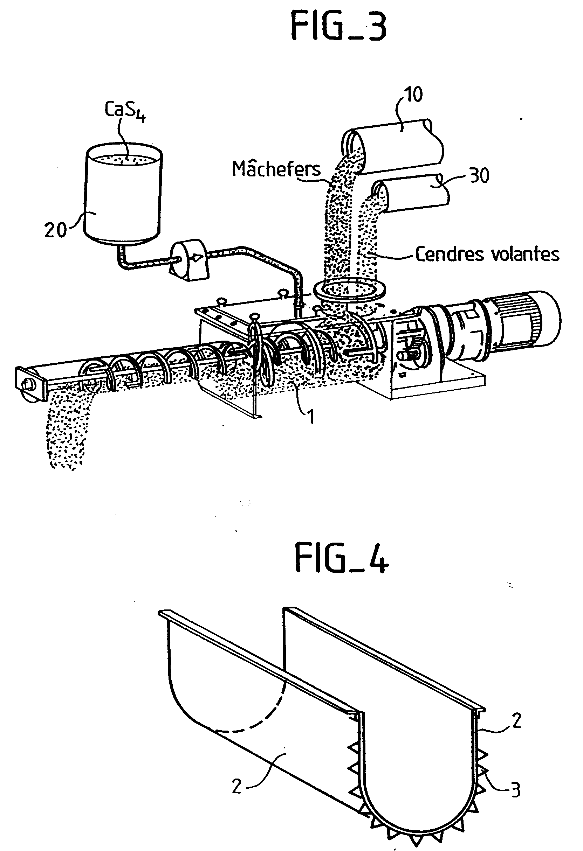

Un exemple de mélangeur-malaxeur susceptible d'être utilisé pour la mise en oeuvre du procédé de l'invention est donné sur la figure 3. Dans ce mélangeur-malaxeur, un rotor 1 à doubles spires coaxiales à pas inversés entraîne les produits, introduits à partir de réservoirs 10 et 20 de mâchefers et de polysulfure de calcium respectivement, et les projette sur les parois chauffantes 2, maintenues entre 35 et 40°C environ, d'une cuve à circulation de vapeur à canaux 3, telle que celle montrée sur la figure 4. Le croisement des spires à pas inversés provoque une inversion des produits assurant ainsi un mélange parfait des produits et donc une excellente homogénéité de la réaction de sulfuration des métaux lourds contenus dans les résidus à traiter. Comme l'indique la figure 3, si les résidus d'incinération contiennent également des cendres volantes, celles-ci sont incorporées aux mâchefers, à partir d'un réservoir 30, au cours de cette étape de formation des sulfures, ou polysulfures, de métaux lourds.

En sortie du mélangeur-malaxeur chauffant, on obtient une pâte de produits sulfurés dans laquelle les métaux lourds sont devenus parfaitement inertes.

Cette pâte peut être utilisée telle quelle, dans des bétons par exemple, ou bien l'étape de formation de sulfures, ou polysulfures, des métaux lourds, est suivie d'une étape de conditionnement dans laquelle ladite poudre de produits sulfurés est agglomérée sous forme de boulettes, cubes ou équivalents. Eventuellement, les résidus sulfurés ainsi conditionnés peuvent être soumis à un séchage final aux micro-ondes de manière à les débarrasser de l'humidité introduite par l'eau contenue dans le polysulfure de calcium CaS4.

Du fait de leur grande stabilité chimique, les produits issus du procédé de neutralisation de l'invention peuvent être stockés dans de simples décharges sans risque de pollution des nappes phréatiques par les métaux lourds. Ils peuvent également être ultérieurement réutilisés pour l'élaboration de bétons, comme mentionné ci-dessus.

La figure 2 montre une variante de réalisation du procédé selon l'invention, dans laquelle l'étape de tri des mâchefers des autres résidus qu'ils contiennent est réalisée par voie hydraulique, immédiatement après l'étape de broyage grossier, et avant une étape de séchage des mâchefers ainsi séparés. De façon classique, le tri hydraulique est effectuée par séparation selon la hauteur à l'intérieur d'une nappe d'eau placée dans un couloir vibrant. Ce procédé est toutefois plus cher et plus polluant que celui mettant en oeuvre le tri mécanique. L'étape de séchage est réalisée, comme décrit plus haut, à l'aide par exemple d'un tube sécheur.

Le procédé de neutralisation selon l'invention, tel qu'il vient d'être décrit, prévoit qu'en présence de cendres volantes, celles-ci sont neutralisées simultanément avec les mâchefers dans la même étape de formation de sulfures, ou polysulfures, de métaux lourds. Toutefois, il doit être entendu que les cendres volantes peuvent tout aussi bien être soumises de façon indépendante à l'étape de formation de sulfures, ou polysulfures, de métaux lourds par sulfuration à l'aide au moins d'un sulfure. Cette disposition est particulièrement avantageuse dans la mesure où le traitement séparé prend en compte le fait que les cendres volantes étant plus chargées en métaux lourds que les mâchefers, elles exigent une concentration plus grande en polysulfure de calcium au niveau de l'étape de sulfuration.

## Revendications

**1 -** Procédé de neutralisation de métaux lourds contenus dans des résidus d'incinération de déchets, caractérisé en ce que ledit procédé comporte une étape de séchage et une étape de neutralisation consistant à former des sulfures, ou polysulfures, desdits métaux lourds.

**2 -** Procédé de neutralisation selon la revendication 1, caractérisé en ce que, lesdits résidus contenant des mâchefers , ledit procédé comporte les étapes suivantes :
- tri mécanique desdits mâchefers destiné à les séparer d'autres résidus, tels que morceaux de verre et métaux à l'état métallique, qu'ils contiennent ;
- broyage fin des mâchefers ainsi obtenus ;
- formation desdits sulfures, ou polysulfures, de métaux lourds par sulfuration des mâchefers à l'aide au moins d'un sulfure.

**3 -** Procédé de neutralisation selon la revendication 1 caractérisé en ce que, lesdits résidus contenant des mâchefers, ledit procédé comporte les étapes suivantes :
- tri hydraulique desdits mâchefers destiné à les séparer d'autres résidus, tels que morceaux de verre et métaux à l'état métallique, qu'ils contiennent ;
- séchage des mâchefers ;
- broyage fin des mâchefers ainsi obtenus ;
- formation desdits sulfures, ou polysulfures, de métaux lourds par sulfuration des mâchefers à l'aide au moins d'un sulfure.

**4 -** Procédé de neutralisation selon l'une des revendications 2 ou 3, caractérisé en ce qu'il comporte une première étape de broyage grossier.

**5 -** Procédé selon l'une quelconque des revendications 1 à 4, caractérisé en ce que, lesdits résidus d'incinération contenant également des cendres volantes, lesdites cendres volantes sont incorporées aux mâchefers au cours de l'étape de formation des sulfures, ou polysulfures, de métaux lourds.

**6 -** Procédé selon l'une quelconque des revendications 1 à 4, caractérisé en ce que, lesdits résidus d'incinération contenant des cendres volantes, lesdites cendres volantes sont soumises de façon indépendantes à ladite étape de formation de sulfures, ou polysulfures, de métaux lourds, par sulfuration des cendres volantes à l'aide au moins d'un sulfure.

**7 -** Procédé de neutralisation selon l'une quelconque des revendications 2 à 6, caractérisé en ce que l'étape de formation des sulfures, ou polysulfures, de métaux lourds est suivie d'une étape de conditionnement des résidus sulfurés.

**8 -** Procédé de neutralisation selon l'une quelconque des revendications 2 à 8, caractérisé en ce ledit procédé comporte une étape de séchage final des résidus sulfurés.

**9 -** Procédé selon l'une quelconque des revendications 2 à 8, caractérisé en ce que ledit sulfure est du polysulfure de calcium.
